# EUROPÄISCHE PATENTSCHRIFT

(11) **EP 3 672 009 B1**
(45) Veröffentlichungstag und Bekanntmachung des Hinweises auf die Patenterteilung: **04.10.2023**
(21) Anmeldenummer: 19217887.9
(22) Anmeldetag: 19.12.2019
(51) Int. Cl.: H02H 9/04, H04L 25/02, H04B 3/02, H04M 1/74, H04M 3/18

(54) **SCHUTZSCHALTUNG, ELEKTRONISCHE VORRICHTUNG UND VERFAHREN ZUM BETREIBEN EINER ELEKTRONISCHEN VORRICHTUNG**
PROTECTION CIRCUIT, ELECTRONIC DEVICE AND METHOD FOR OPERATING AN ELECTRONIC DEVICE
CIRCUIT DE PROTECTION, DISPOSITIF ÉLECTRONIQUE ET PROCÉDÉ DE FONCTIONNEMENT D'UN DISPOSITIF ÉLECTRONIQUE

(30) Priorität: 21.12.2018 DE 102018133519
(43) Veröffentlichungstag der Anmeldung: 24.06.2020
(73) Patentinhaber: Marelli Automotive Lighting Reutlingen (Germany) GmbH, 72762 Reutlingen (DE)
(72) Erfinder: Horbelt, Markus, 75417 Mühlacker (DE); Laubenstein, Rüdiger, 72760 Reutlingen (DE); Wolf, Manuel, 97074 Würzburg (DE)
(74) Vertreter: DREISS Patentanwälte PartG mbB

(56) Entgegenhaltungen:
- EP-A1- 1 120 949
- DE-U1- 20 007 619
- US-A- 3 860 757
- US-A1- 2014 085 951

## Beschreibung

Die Offenbarung betrifft eine Schutzschaltung für einen zur Datenkommunikation mit einer weiteren Einheit verwendbaren Anschluss einer elektronischen Vorrichtung, insbesondere eines Steuergeräts.

Die Offenbarung betrifft ferner eine elektronische Vorrichtung, insbesondere ein Steuergerät, mit wenigstens einer derartigen Schutzschaltung und ein Verfahren zum Betreiben einer elektronischen Vorrichtung.

Es ist bekannt, Anschlüsse von elektronischen Vorrichtungen zur Datenkommunikation mit weiteren Einheiten mittels einer galvanischen Trennung vor unerwünschten Betriebszuständen bzw. Fremdeinflüssen zu schützen. Solche unerwünschten Betriebszustände bzw. Fremdeinflüsse können beispielsweise dadurch entstehen, dass der Anschluss bzw. eine mit dem Anschluss verbindbare Signalleitung einen Kurzschluss zu einem für die Datenkommunikation unzulässig hohen elektrischen Potential aufweist, beispielsweise einen Kurzschluss zu einer elektrischen Versorgungsspannung, welche u.U. einen wesentlich höheren Betrag aufweist als die für die Datenkommunikation verwendbaren elektrischen Spannungspegel. Die galvanische Trennung kann beispielsweise mittels magnetischen und/oder optischen Isolatoren erfolgen. Es ist ferner bekannt, wenigstens einen elektrischen Widerstand in Serie zu dem Anschluss für die Datenkommunikation zu schalten, um in einem Fehlerfall einen ggf. in die elektronische Vorrichtung bzw. ihren Anschluss fließenden Strom zu begrenzen.

Die Vorsehung von Isolatoren zur galvanischen Trennung ist aufwendig, erfordert i.d.R. einen wesentlich größeren Bauraum und bedingt hohe Fertigungskosten, und die Vorsehung von Serienwiderständen begrenzt die Übertragungsbandbreite des Anschlusses für die Datenkommunikation, da sich aus der Kombination des Serienwiderstands mit (parasitären) Kapazitäten von weiteren Bauteilen bzw. einer Signalleitung eine Tiefpasswirkung ergibt.

EP 1 120 949 A1 beschreibt eine Strombegrenzungsschaltung für eine Telefoninstallation.

Demgemäß ist es Aufgabe der vorliegenden Erfindung, eine Schutzschaltung und eine elektronische Vorrichtung der eingangs genannten Art dahingehend zu verbessern, dass wenigstens manche der vorstehend genannten Nachteile vermindert bzw. vermieden werden.

Die Erfindung bezieht sich auf eine Schutzschaltung gemäß Anspruch 1 und ein Verfahren zum Betreiben einer elektronischen Vorrichtung gemäß Anspruch 7. Weitere Ausgestaltungen der Erfindung sind Bestandteil der abhängigen Ansprüche.

Dadurch ist vorteilhaft ein zuverlässiger Schutz des Anschlusses der elektronischen Vorrichtung ermöglicht, ohne eine Übertragungsbandbreite einzuschränken. Ferner können vorteilhaft auch statische Signalpegel für die Datenkommunikation mittels der Schutzschaltung von der elektronischen Vorrichtung zu der weiteren Einheit übertragen werden.

Ein weiterer Vorteil bevorzugter Ausführungsformen besteht darin, dass der Schutz durch die Schutzschaltung mit der Granularität von eins beliebig skaliert werden kann. Mit anderen Worten kann für jeden zu schützenden Anschluss der elektronischen Vorrichtung bei Bedarf eine entsprechende Schutzschaltung vorgesehen werden, die für jeden der mehreren Anschlüsse einen vergleichbaren Schutz realisiert. Bei weiteren bevorzugten Ausführungsformen ist vorgesehen, dass die Diode eine Schottky-Diode ist.

Erfindungsgemäß ist vorgesehen, dass ein erster Widerstand zwischen einem zweiten Anschluss der Parallelschaltung und einem ersten elektrischen Bezugspotential geschaltet ist.

Dadurch kann der zweite Anschluss der Parallelschaltung und/oder eine ggf. daran angeschlossene Signalleitung, die z.B. zu einem entsprechenden Anschluss der weiteren Einheit führt, vorteilhaft in einem vorgebbaren Gleichspannungsbezug zu dem ersten elektrischen Bezugspotential gehalten werden. Auf diese Weise kann insbesondere auch eine Aufladung des zweiten Anschlusses bzw. der ggf. daran angeschlossenen Signalleitung, z.B. durch Leckströme, verhindert werden. Bei weiteren bevorzugten Ausführungsformen entspricht das erste elektrische Bezugspotential beispielsweise einem Massepotential.

Bei weiteren bevorzugten Ausführungsformen ist vorgesehen, dass ein zweiter Widerstand zwischen dem ersten Anschluss der Parallelschaltung und einem zweiten elektrischen Bezugspotential geschaltet ist. Dadurch kann der erste Anschluss der Parallelschaltung und/oder eine ggf. daran angeschlossene Signalleitung vorteilhaft in einem vorgebbaren Gleichspannungsbezug zu dem zweiten elektrischen Bezugspotential gehalten werden. Auf diese Weise kann insbesondere auch eine Entladung bzw. Umladung des ersten Anschlusses bzw. der ggf. daran angeschlossenen Komponente(n), z.B. durch Leckströme, verhindert werden. Bei weiteren bevorzugten Ausführungsformen entspricht das zweite elektrische Bezugspotential beispielsweise einer Versorgungsspannung für die zu schützende Baugruppe, also beispielsweise einer Versorgungsspannung der elektronischen Vorrichtung, der die Schutzschaltung zugeordnet ist.

Weitere bevorzugte Ausführungsformen beziehen sich auf eine Schutzeinrichtung für eine mehrere Anschlüsse zur Datenkommunikation mit einer weiteren Einheit aufweisende elektronische Vorrichtung, wobei die Schutzeinrichtung wenigstens eine Schutzschaltung gemäß den Ausführungsformen aufweist, die wenigstens einem der mehreren Anschlüsse zugeordnet ist.

Weitere bevorzugte Ausführungsformen beziehen sich auf eine elektronische Vorrichtung, insbesondere ein Steuergerät, mit wenigstens einem Anschluss zur Datenkommunikation mit einer weiteren Einheit, wobei die Vorrichtung wenigstens eine Schutzschaltung gemäß den Ausführungsformen und/oder wenigstens eine Schutzeinrichtung gemäß den Ausführungsformen aufweist.

Bei weiteren bevorzugten Ausführungsformen ist vorgesehen, dass die wenigstens eine Schutzschaltung und/oder die wenigstens eine Schutzeinrichtung in die elektronische Vorrichtung integriert ist. Dadurch ergibt sich eine besonders klein bauende Konfiguration.

Weitere bevorzugte Ausführungsformen beziehen sich auf ein Verfahren zum Betreiben einer elektronischen Vorrichtung, insbesondere eines Steuergeräts, mit wenigstens einem Anschluss zur Datenkommunikation mit einer weiteren Einheit, wobei das Verfahren aufweist: Verwenden wenigstens einer Schutzschaltung gemäß den Ausführungsformen und/oder wenigstens einer Schutzeinrichtung gemäß den Ausführungsformen. Auf diese Weise kann der wenigstens eine Anschluss der elektronischen Vorrichtung durch die Schutzschaltung bzw. Schutzeinrichtung gemäß den Ausführungsformen geschützt werden.

Bei weiteren bevorzugten Ausführungsformen ist vorgesehen, dass die elektronische Vorrichtung wenigstens ein erstes Signal, insbesondere ein digitales Signal, über die wenigstens eine Schutzschaltung und/oder die wenigstens eine Schutzeinrichtung an eine weitere Einheit sendet. Im Falle des Sendens überträgt die Kondensatorschaltung der Schutzschaltung vorteilhaft eine Flankensteilheit des zu sendenden Signals bzw. generell Wechselanteile des zu sendenden Signals an die Senke, die das Signal empfangen soll, beispielsweise die vorstehend beschriebene weitere Einheit, bei der es sich bei weiteren bevorzugten Ausführungsformen ebenfalls um eine elektronische Vorrichtung und/oder ein Steuergerät und/oder ein Peripheriegerät oder dergleichen handeln kann. Des Weiteren lädt bzw. entlädt die Kondensatorschaltung der Schutzschaltung das der Signalsenke zugeordnete Netz bzw. die entsprechende Signalleitung transient, sperrt jedoch Gleichspannungsanteile. Ferner ergibt sich durch die Diode der Schutzschaltung eine wirksame, hochohmige Sperre für von der Signalsenke bzw. der weiteren Einheit ausgehende Gleichspannung, wie sie beispielsweise in einem Fehlerfall auftreten kann, bei dem die Signalleitung zwischen der elektronischen Vorrichtung bzw. ihrer Schutzschaltung und der weiteren Einheit zu einer größeren Spannung, beispielsweise einer Versorgungsspannung, kurzgeschlossen wird. Darüber hinaus überträgt die Diode der Schutzschaltung Gleichspannungsanteile des zu sendenden Signals von der Quelle, also der elektronischen Vorrichtung bzw. dem Steuergerät zu der Signalsenke, also beispielsweise der weiteren Einheit.

Bei weiteren bevorzugten Ausführungsformen ist vorgesehen, dass die elektronische Vorrichtung wenigstens ein zweites Signal, insbesondere ein digitales Signal, über die wenigstens eine Schutzschaltung und/oder die wenigstens eine Schutzeinrichtung von einer bzw. der weiteren Einheit empfängt. In diesem Fall stellt also die weitere Einheit die Signalquelle und die elektronische Vorrichtung (bzw. ein entsprechender Anschluss) die Signalsenke dar.

Hierbei überträgt die Kondensatorschaltung der Schutzschaltung vorteilhaft eine Flankensteilheit (bzw. generell Wechselanteile) des von der Signalquelle (vorliegend die weitere Einheit) zu sendenden Quellsignals an die Senke, also die zu schützende elektronische Vorrichtung. Des Weiteren lädt bzw. entlädt die Kondensatorschaltung der Schutzschaltung das der Signalsenke zugeordnete Netz bzw. die entsprechende Signalleitung bzw. den Anschluss transient, sperrt jedoch Gleichspannungsanteile. Ferner ergibt sich durch die Diode der Schutzschaltung eine wirksame, hochohmige Sperre für eine von der Signalquelle bzw. der weiteren Einheit ausgehende Gleichspannung, wie sie beispielsweise in einem Fehlerfall auftreten kann, bei dem die Signalleitung zwischen der elektronischen Vorrichtung bzw. ihrer Schutzschaltung und der weiteren Einheit zu einer größeren Spannung, beispielsweise einer Versorgungsspannung, kurzgeschlossen wird. Darüber hinaus überträgt die Diode der Schutzschaltung Gleichspannungsanteile von der Senke, also der elektronischen Vorrichtung bzw. dem Steuergerät zu der Signalquelle, also beispielsweise der weiteren Einheit ("niederohmiges Laden").

Bei weiteren bevorzugten Ausführungsformen ist vorgesehen, dass die wenigstens eine Schutzschaltung und/oder die wenigstens eine Schutzeinrichtung den wenigstens einen Anschluss vor Überspannungen schützt. Dies kann bei weiteren bevorzugten Ausführungsformen z.B. auf die vorstehend beispielhaft beschriebene Weise unter Bezugnahme auf den Fall des Sendens bzw. Empfangens von Signalen erfolgen.

Das Prinzip gemäß den Ausführungsformen kann für alle elektronischen Vorrichtungen genutzt werden, ist besonders vorteilhaft auch auf Steuergeräte für eine Beleuchtungseinrichtung, insbesondere für Kraftfahrzeuge, anwendbar.

Weitere Merkmale, Anwendungsmöglichkeiten und Vorteile weiterer bevorzugter Ausführungsformen ergeben sich aus der nachfolgenden Beschreibung und den Figuren der Zeichnung.

Nachfolgend werden beispielhafte Ausführungsformen unter Bezugnahme auf die Figuren der Zeichnung erläutert. In der Zeichnung zeigt:
- Fig. 1: schematisch ein Blockdiagramm einer Schutzschaltung in einem Zielsystem gemäß bevorzugten Ausführungsformen,
- Fig. 2A,: schematisch eine beispielhafte Schutzschaltung,

- 2B,: schematisch eine erfindungsgemäße Schutzschaltung,
- 2C: schematisch eine beispielhafte Schutzschaltung,
- Fig. 3: schematisch ein Blockdiagramm einer Schutzeinrichtung gemäß weiteren bevorzugten Ausführungsformen,
- Fig. 4: schematisch ein Blockdiagramm eines Systems gemäß weiteren bevorzugten Ausführungsformen,
- Fig. 5: schematisch ein Blockdiagramm eines Systems mit einer Schutzeinrichtung gemäß weiteren bevorzugten Ausführungsformen,
- Fig. 6: schematisch ein Blockdiagramm eines Systems mit einer Schutzeinrichtung gemäß weiteren bevorzugten Ausführungsformen, und
- Fig. 7: schematisch ein vereinfachtes Flussdiagramm eines Verfahrens gemäß weiteren bevorzugten Ausführungsformen.

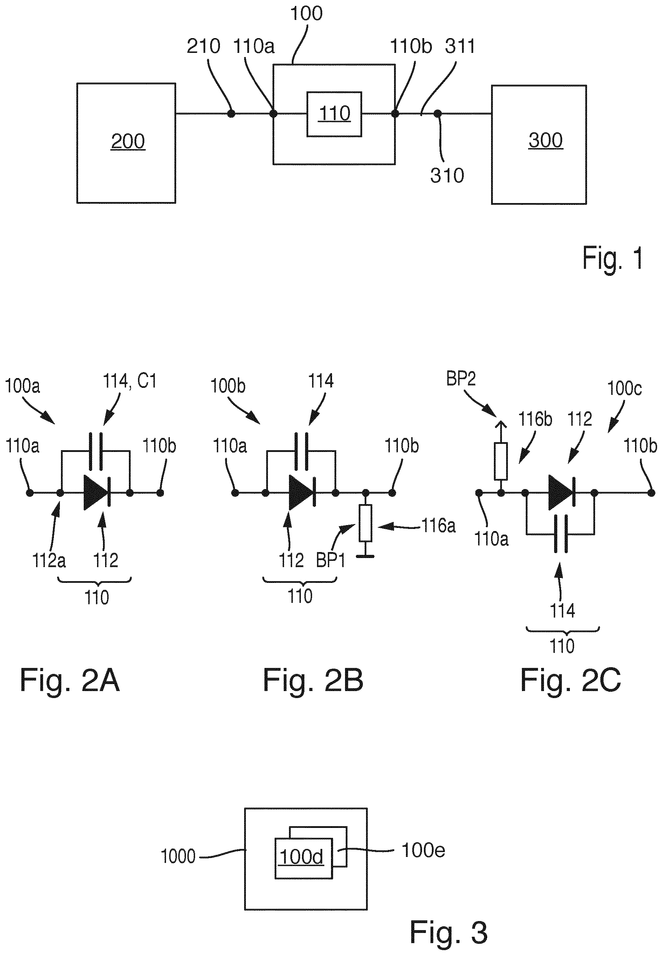

Figur 1 zeigt schematisch ein Blockdiagramm einer Schutzschaltung 100 gemäß bevorzugten Ausführungsformen. Die Schutzschaltung 100 ist beispielhaft in einem Zielsystem angeordnet, das eine elektronische Vorrichtung 200, insbesondere ein Steuergerät, aufweist und eine weitere Einheit 300, mit der die Vorrichtung 200 über einen Anschluss 210 in Datenkommunikation treten kann. Bei der weiteren Einheit 300 kann es sich beispielsweise um ein Peripheriegerät handeln. Der Anschluss 210 der Vorrichtung 200 und ein entsprechender Anschluss 310 der weiteren

Einheit 300 sind jeweils mit der Schutzschaltung 100 verbunden, so dass die genannte Datenkommunikation zwischen den Einheiten 200, 300 über die Schutzschaltung 100 erfolgen kann. Die Schutzschaltung 100 kann beispielsweise wenigstens zwei Anschlüsse 110a, 110b zur Kontaktierung der Anschlüsse 210, 310 aufweisen.

Erfindungsgemäß weist die Schutzschaltung 100, von der eine Konfiguration 100a beispielhaft in Figur 2A abgebildet ist, eine Parallelschaltung 110 aus einer Diode 112 und einer wenigstens einen Kondensator C1 aufweisenden Kondensatorschaltung 114 auf.

Bei weiteren bevorzugten Ausführungsformen kann die Kondensatorschaltung 114 beispielsweise auch mehrere Kondensatoren (nicht gezeigt) aufweisen, die beispielsweise elektrisch parallel zueinander geschaltet sind. Dadurch werden weitere Freiheitsgrade bezüglich der resultierenden Gesamtkapazität der Kondensatorschaltung 114 und/oder eines (zeitlichen) Betriebsverhaltens (z.B. bezüglich des inneren Verlustwiderstands, ESR, equivalent series resistance) geschaffen.

Erfindungsgemäß ist ein erster Anschluss 110a der Parallelschaltung mit dem Anschluss 210 der elektronischen Vorrichtung 200 verbindbar, wobei ein zweiter Anschluss 110b der Parallelschaltung 110 (zumindest mittelbar, z.B. über eine Signalleitung 311) mit der weiteren Einheit 300 (Fig. 1) verbindbar ist, und wobei eine Anode 112a der Diode 112 mit dem ersten Anschluss 110a der Parallelschaltung 110 verbunden ist. Dadurch ist vorteilhaft ein zuverlässiger Schutz des Anschlusses 210 (Fig. 1) der elektronischen Vorrichtung 200 ermöglicht, ohne eine Übertragungsbandbreite für die Datenkommunikation zwischen der elektronischen Vorrichtung 200 und der weiteren Einheit 300 einzuschränken. Ferner können vorteilhaft auch statische Signalpegel für diese Datenkommunikation mittels der Schutzschaltung 100 übertragen werden.

Ein weiterer Vorteil bevorzugter Ausführungsformen besteht darin, dass der Schutz durch die Schutzschaltung 100 mit der Granularität von eins beliebig skaliert werden kann. Mit anderen Worten kann für jeden zu schützenden Anschluss 210 der elektronischen Vorrichtung 200 bei Bedarf eine entsprechende Schutzschaltung 100, 100a vorgesehen werden, die für jeden der Anschlüsse 210 einen vergleichbaren Schutz realisiert.

Bei weiteren bevorzugten Ausführungsformen ist vorgesehen, dass die Diode 112 (Fig. 2A) eine Schottky-Diode ist.

Figur 2B zeigt beispielhaft ein Schaltbild gemäß einer erfindungsgemäßen Ausführungsform 100b der Schutzschaltung. Zusätzlich zu der Konfiguration 100a gemäß Figur 2A ist bei der Schutzschaltung 100b nach Figur 2B ein erster Widerstand 116a zwischen dem zweiten Anschluss 110b der Parallelschaltung 110 und einem ersten elektrischen Bezugspotential BP1 geschaltet. Dadurch kann der zweite Anschluss 110b der Parallelschaltung 110 (Fig. 1) und/oder eine ggf. daran angeschlossene Signalleitung 311, die z.B. zu dem Anschluss 310 der weiteren Einheit 300 führt, vorteilhaft in einem vorgebbaren Gleichspannungsbezug zu dem ersten elektrischen Bezugspotential BP1 (Fig. 2B) gehalten werden. Auf diese Weise kann insbesondere auch eine Aufladung des zweiten Anschlusses 110b bzw. der ggf. daran angeschlossenen Signalleitung 311, z.B. durch Leckströme, verhindert werden. Bei weiteren bevorzugten Ausführungsformen entspricht das erste elektrische Bezugspotential BP1 beispielsweise einem Massepotential.

Figur 2C zeigt beispielhaft ein Schaltbild gemäß weiteren bevorzugten Ausführungsformen 100c der Schutzschaltung. Zusätzlich zu der Konfiguration 100a gemäß Figur 2A ist bei der Schutzschaltung 100c nach Figur 2C ein zweiter Widerstand 116b zwischen dem ersten Anschluss 110a der Parallelschaltung und einem zweiten elektrischen Bezugspotential BP2 geschaltet. Dadurch kann der erste Anschluss 110a der Parallelschaltung 110 und/oder eine ggf. daran angeschlossene Signalleitung bzw. der Anschluss 210 vorteilhaft in einem vorgebbaren Gleichspannungsbezug zu dem zweiten elektrischen Bezugspotential BP2 gehalten werden. Auf diese Weise kann insbesondere auch eine Entladung bzw. Umladung des ersten Anschlusses 110a bzw. der ggf. daran angeschlossenen Komponente(n), z.B. durch Leckströme, verhindert werden. Bei weiteren bevorzugten Ausführungsformen entspricht das zweite elektrische Bezugspotential BP2 beispielsweise einer Versorgungsspannung für die zu schützende Baugruppe, also beispielsweise einer Versorgungsspannung der elektronischen Vorrichtung 200, der die Schutzschaltung 100c zugeordnet ist.

Figur 3 zeigt schematisch ein Blockdiagramm einer Schutzeinrichtung 1000 gemäß weiteren bevorzugten Ausführungsformen. Die Schutzeinrichtung 1000 weist wenigstens eine, bevorzugt mehrere, Schutzschaltungen 100d, 100e gemäß den Ausführungsformen auf. Jede der vorliegend beispielhaft zwei abgebildeten Schutzschaltungen 100d, 100e kann z.B. eine Konfiguration gemäß Fig. 2A oder 2B oder 2C aufweisen und beispielsweise einem entsprechenden Anschluss einer zu schützenden elektronischen Vorrichtung 200 zugeordnet sein. Die Schutzeinrichtung 1000 ermöglicht vorteilhaft einen effizienten Schutz von einem oder mehreren Anschlüssen 210 (Fig. 1) einer elektronischen Vorrichtung 200, und kann bei weiteren bevorzugten Ausführungsformen beispielsweise auch in die elektronische Vorrichtung 200 integriert werden. Bei weiteren bevorzugten Ausführungsformen können auch einzelne oder mehrere (individuelle) Schutzschaltungen gemäß den Ausführungsformen in die elektronische Vorrichtung 200 integriert werden. Aufgrund ihrer Kompaktheit ist es bei weiteren bevorzugten Ausführungsformen auch denkbar, die Schutzschaltung direkt auf einem (selben) Halbleitersubstrat (nicht gezeigt) anzuordnen, wie den Anschluss 210 der Vorrichtung 200.

Weitere bevorzugte Ausführungsformen beziehen sich auf eine elektronische Vorrichtung 200 (Fig. 1), insbesondere ein Steuergerät, mit wenigstens einem Anschluss 210 zur Datenkommunikation mit einer weiteren Einheit 300, wobei die Vorrichtung 200 wenigstens eine Schutzschaltung 100, 100a, 100b, 100c gemäß den Ausführungsformen und/oder wenigstens eine Schutzeinrichtung 1000 (Fig. 3) gemäß den Ausführungsformen aufweist.

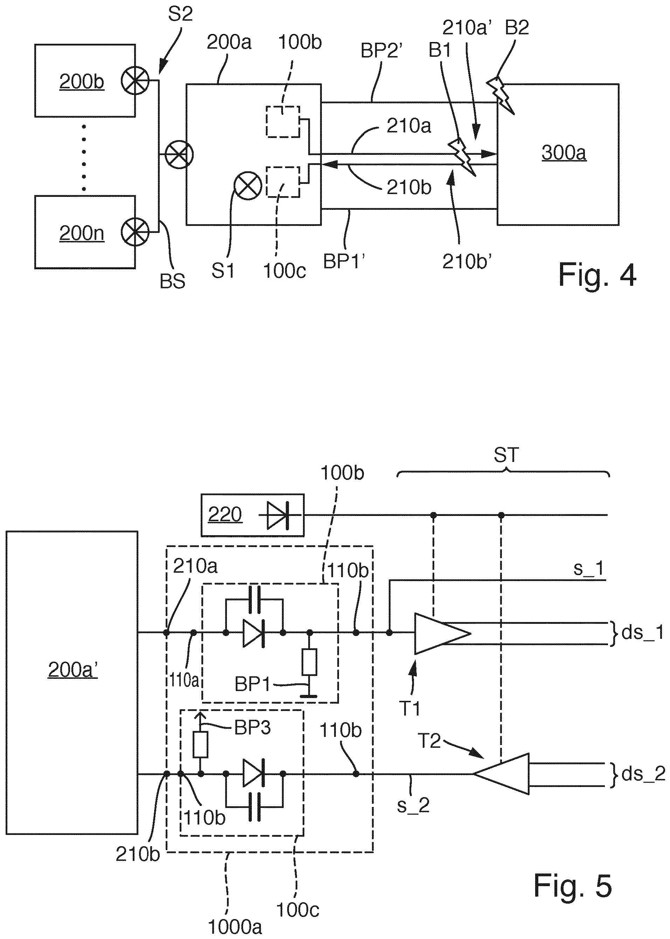

Figur 4 zeigt schematisch ein Blockdiagramm eines Systems gemäß weiteren bevorzugten Ausführungsformen. Das System weist mehrere elektronische Vorrichtungen, insbesondere Steuergeräte, 200a, 200b, .., 200n auf, die untereinander durch ein Bussystem BS verbunden sind. Das Steuergerät 200a weist zwei Anschlüsse 210a, 210b zur Datenkommunikation mit einem Peripheriegerät 300a auf, wobei die beiden Anschlüsse 210a, 210b über jeweils eine Signalleitung 210a', 210b' mit entsprechenden Anschlüssen (nicht gezeigt) des Peripheriegeräts 300a elektrisch verbunden sind. Weiter in Figur 4 abgebildet ist eine erste elektrische Versorgungsleitung BP1', die beispielsweise mit dem Massepotenzial verbunden ist. Ebenso in Figur 4 abgebildet ist eine zweite elektrische Versorgungsleitung BP2', die mit einem elektrischen Potenzial verbunden ist, das - bezogen auf das Massepotenzial - einer Versorgungsspannung für das Steuergerät 200a entspricht.

Die Symbole B1, B2 symbolisieren einen unerwünschten Kurzschluss wenigstens einer der Signalleitungen 210a', 210b' zu der zweiten elektrischen Versorgungsleitung BP2`. Bei konventionellen Steuergeräten können dadurch beispielsweise Logikkomponenten oder auch das gesamte Steuergerät zerstört werden, vergleiche das Symbol S1. In ungünstigen Fällen kann sich die Störung S1 aufgrund der "Überspannung" sogar über das Bussystem BS zu den anderen Steuergeräten 200b, .., 200n hin ausbreiten, vgl. die Symbole S2 in dem Bussystem BS und den Anschlüssen der Steuergeräte 200b, 200n an das Bussystem BS, und diese bzw. das Bussystem BS stören bzw. beschädigen.

Demgegenüber bietet das Prinzip gemäß den vorliegenden Ausführungsformen vorteilhaft Schutz vor solchen Fehlerzuständen. Beispielsweise kann das Steuergerät 200a wie schematisch in Figur 4 angedeutet gemäß weiteren bevorzugten Ausführungsformen zwei Schutzschaltungen 100b, 100c (Konfiguration z.B. entsprechend Fig. 2B, 2C) aufweisen, wobei die Schutzschaltung 100b beispielsweise dem ersten Anschluss 210a und die Schutzschaltung 100c beispielsweise dem zweiten Anschluss 210b des Steuergeräts 200a zugeordnet ist. Es ist zu beachten, dass die Darstellung gemäß Figur 4 eine stark vereinfachte, schematische Darstellung ist, und sich die genaue Schaltungstopologie bezüglich der Integration der jeweiligen Schutzschaltung 100b, 100c in die betreffenden Anschlüsse 210a, 210b beispielsweise gemäß Figur 1 ergibt.

Mit anderen Worten ist der erste Anschluss 110a (Fig. 2B) der Schutzschaltung 100b gemäß Figur 4 mit dem ersten Anschluss 210a des Steuergeräts 200a gemäß Figur 4 verbunden, und der zweite Anschluss 110b (Fig. 2B) der Schutzschaltung 100b ist mit der Signalleitung 210a' gemäß Figur 4 verbunden (Serienschaltung aus Anschluss 210a, Schutzschaltung 100b, Signalleitung 210a'). Dementsprechend ist der erste Anschluss 110a (Fig. 2C) der Schutzschaltung 100c gemäß Figur 4 mit dem zweiten Anschluss 210b des Steuergeräts 200a verbunden, und der zweite Anschluss 110b (Fig. 2C) der Schutzschaltung 100c ist mit der Signalleitung 210b' gemäß Figur 4 verbunden (Serienschaltung aus Anschluss 210b, Schutzschaltung 100c, Signalleitung 210b').

Bei weiteren bevorzugten Ausführungsformen ist das Steuergerät 200a dazu ausgebildet, Daten über den ersten Anschluss 210a (und über die hierzu bezüglich ihrer Anschlüsse 110a, 110b bzw. ihrer Parallelschaltung 110 in Serie geschaltete Schutzschaltung 100b) an das Peripheriegerät 300a zu übertragen, wobei die betreffende Wirkungskette die folgenden Elemente in der genannten Reihenfolge aufweist: erster Anschluss 210a, Parallelschaltung 110 der Schutzschaltung 100b gemäß Figur 2B, Signalleitung 210a`, Peripheriegerät 300a.

Bei weiteren bevorzugten Ausführungsformen ist das Steuergerät 200a dazu ausgebildet, Daten über den zweiten Anschluss 210b (und über die Schutzschaltung 100c) von dem Peripheriegerät 300a zu empfangen, wobei die betreffende Wirkungskette die folgenden Elemente in der genannten Reihenfolge aufweist: Peripheriegerät 300a, Signalleitung 210b`, Parallelschaltung 110 der Schutzschaltung 100c gemäß Figur 2C, zweiter Anschluss 210b.

Bei den vorstehend unter Bezugnahme auf Figur 3, 4 und nachstehend unter Bezugnahme auf die Figuren 5, 6, 7 beschriebenen Ausführungsformen gelten die vorstehend unter Bezugnahme auf Figur 2A, 2B, 2C beschriebenen Wirkungen und Vorteile der Schutzschaltung 100, 100a, 100b, 100c jeweils in entsprechender Weise.

Figur 5 zeigt schematisch ein Blockdiagramm eines Systems mit einer Schutzeinrichtung 1000a gemäß weiteren bevorzugten Ausführungsformen. Die Schutzeinrichtung 1000a weist eine Schutzschaltung 100b (vgl. Fig. 2B) auf, die einem ersten Anschluss 210a eines Steuergeräts 200a` zugeordnet ist und eine Schutzschaltung 100c (vgl. Fig. 2C), die einem zweiten Anschluss 210b des Steuergeräts 200a` zugeordnet ist. Vorliegend dient der erste Anschluss 210a zum Senden von Daten von dem Steuergerät 200a` an eine Figur 5 nicht abgebildete weitere Einheit (beispielsweise Peripheriegerät 300a analog zu Figur 4), und der zweite Anschluss 210b dient zum Empfangen von Daten von der weiteren Einheit 300a.

Der zweite Anschluss 110b der Schutzschaltung 100b ("Sendezweig") ist mit einer ersten Treiberschaltung T1 verbunden, die aus dem nicht differentiellen Ausgangssignal s_1, welches die von dem Steuergerät 200a` über den ersten Anschluss 210a und die Schutzschaltung 100b an die weitere Einheit zu sendenden Daten charakterisiert, ein differentielles Ausgangssignal ds_1 erzeugt. Eine optionale elektrische Energieversorgungseinrichtung für die erste Treiberschaltung T1 ist in Figur 5 mit dem Bezugszeichen 220 versehen.

Der zweite Anschluss 110b der Schutzschaltung 100c ("Empfangszweig") ist mit dem Ausgang einer zweiten Treiberschaltung T2 verbunden, die aus einem differentiellen Empfangssignal ds_2, welches die von der weiteren Einheit 300a über entsprechende differenzielle Signalleitungen, die zweite Treiberschaltung T2, die Schutzschaltung 100c, den zweiten Anschluss 210b an das Steuergerät 200a` zu sendenden Daten charakterisiert, ein nicht differentielles Empfangssignal s_2 erzeugt. Optional kann auch die elektrische Energieversorgung der zweiten Treiberschaltung T2 durch die Energieversorgungseinrichtung 220 bewerkstelligt werden.

Aufgrund des Vorhandenseins der Schutzschaltungen 100b, 100c der Schutzeinrichtung 1000a kann im Fehlerfalle, wenn beispielsweise eine oder mehrere der differentiellen Signalleitungen, die die differentiellen Signale ds_1, ds_2 führen, und/oder die nicht differentiellen Signalleitungen am Eingang der ersten Treiberschaltung T1 bzw. am Ausgang der zweiten Treiberschaltung T2 einen Kurzschluss zu einer Versorgungsspannung oder dergleichen aufweisen, das Steuergerät 200a` wirksam vor diesem Kurzschluss bzw. der Einwirkung der Versorgungsspannung (Überspannung) auf die Anschlüsse 210a, 210b geschützt werden, weil sich die betreffende Überspannung allenfalls auf die in Figur 5 rechts der Schutzeinrichtung 1000a liegenden Schaltungsteile ST auswirken kann, nicht jedoch durch die Schutzeinrichtung 1000a hindurch auf die Anschlüsse 210a, 210b wirken kann.

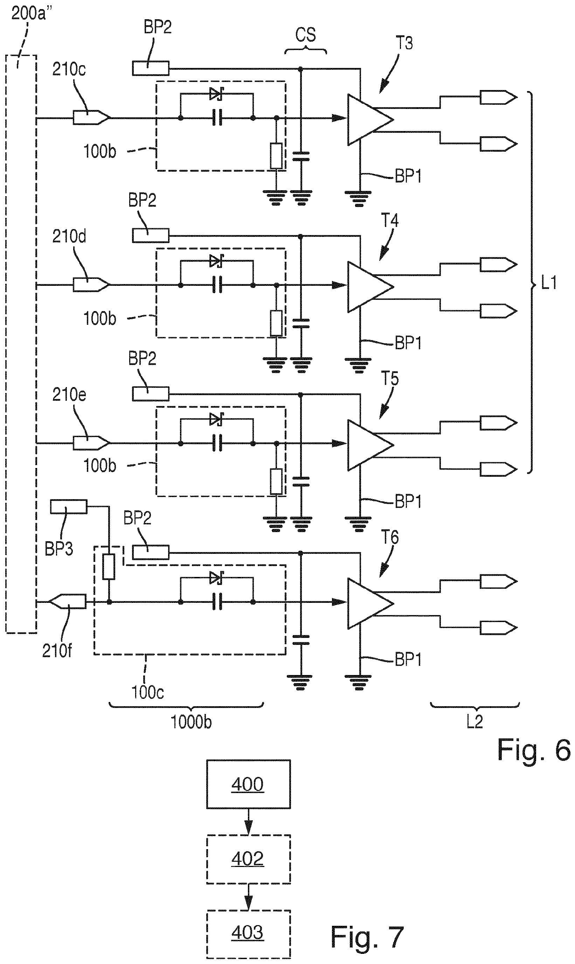

Figur 6 zeigt schematisch ein Blockdiagramm eines Systems mit einer Schutzeinrichtung 1000b gemäß weiteren bevorzugten Ausführungsformen. Die Schutzeinrichtung 1000b weist vorliegend drei Schutzschaltungen 100b (vgl. Fig. 2B) auf, die jeweils einem von drei Sende-Anschlüssen 210c, 210d, 210e eines Steuergeräts 200a" zugeordnet sind, und eine Schutzschaltung 100c (Fig. 2C), die einem Empfangs-Anschluss 210f des Steuergeräts 200a" zugeordnet ist. Ausgangssignale der drei Schutzschaltungen 100b werden auf eine jeweilige Treiberschaltung T3, T4, T5 geführt, zur Erzeugung von differentiellen Signalen, die über entsprechende Signalleitungen L1 an eine weitere Einheit (nicht in Fig. 6 gezeigt, z.B. Peripheriegerät 300a gemäß Fig. 4) übertragen werden. Die Treiberschaltung T6 transformiert ein über die Signalleitungen L2 eingehendes differentielles Signal in ein nicht differentielles Signal, das über die Schutzschaltung 100c dem Anschluss 210f des Steuergeräts 210a" zugeführt wird.

Optional sind ein oder mehrere Stützkondensatoren CS vorgesehen, die die Versorgungsspannung BP3, z.B. für die Treiberschaltungen T3, T4, T5, T6, puffern.

Bei weiteren bevorzugten Ausführungsformen wird durch die Signalleitungen L1, L2 beispielsweise eine (z.B. TIA-644-2001-konforme) LVDS (low voltage differential signaling, Signalisierung mittels differentiellen Niederspannungssignalen)-Schnittstelle bereitgestellt, wobei über die Anschlüsse 210c, 210d, 210e drei Sendesignale ("TX-Signale", bezogen auf das Steuergerät 210a''), z.B. CLK, LATCH, DATA, realisierbar sind, und über den Anschluss 210f ein Empfangssignal ("RX Response").

Bei weiteren bevorzugten Ausführungsformen werden die dem Steuergerät 200a" zugeordneten Treiberschaltungen T3, T4, T5, T6 (ggf. ebenso wie der nicht gezeigten weiteren Einheit zugeordnete Treiberschaltungen) durch eine separate Betriebsspannung BP3 von z.B. 3,3 Volt (V) versorgt, die bei weiteren bevorzugten Ausführungsformen beispielsweise vergleichbar ist zu dem zweiten elektrischen Bezugspotential BP2, besonders bevorzugt jedoch nicht galvanisch mit dem zweiten elektrischen Bezugspotential BP2 verbunden ist. Durch eine Trennung der separaten Betriebsspannung BP3 von dem zweiten elektrischen Bezugspotential BP2 wird bei weiteren bevorzugten Ausführungsformen verhindert, dass das zweite elektrische Bezugspotential BP2 in einem Fehlerfall, bei dem die dritte Betriebsspannung BP3 kontaminiert wird, ebenfalls kontaminiert wird.

Falls eine oder mehrere der Signalleitungen L1, L2 auf ein unzulässig hohes Potential, z.B. entsprechend einer größeren Spannung als der genannten Betriebsspannung BP3 von 3,3 Volt, geschlossen werden, könnte wenigstens eine der Treiberschaltungen T3, T4, T5, T6 undefiniert beschädigt werden, und es wäre bei konventionellen Systemen, die nicht über die Schutzschaltungen 110b, 110c verfügen, nicht auszuschließen, dass die entsprechende Überspannung einen oder mehrere der Anschlüsse 210c, 210d, 210e, 210f erreicht. Demgegenüber verhindern bevorzugte Ausführungsformen mittels der Schutzschaltungen 110b, 110c der Schutzeinrichtung 1000b vorliegend, dass ein (durch die Überspannung bedingter) maximal zulässiger Strom in die Anschlüsse 210c, .., 210f überschritten wird und stellen somit den weiteren unbeeinflussten Betrieb des Steuergeräts 200a" sicher.

Figur 7 zeigt schematisch ein vereinfachtes Flussdiagramm eines Verfahrens zum Betreiben einer elektronischen Vorrichtung 200, 200a, 200a', 200a" gemäß weiteren bevorzugten Ausführungsformen. In Schritt 400 wird wenigstens eine Schutzschaltung 100, 100a, 100b, 100c gemäß den Ausführungsformen, z.B. für einen Betrieb der elektronischen Vorrichtung, verwendet. Auf diese Weise kann der wenigstens eine Anschluss 210 (Fig. 1) der elektronischen Vorrichtung 200 durch die Schutzschaltung bzw. eine Schutzeinrichtung gemäß den Ausführungsformen geschützt werden.

Bei weiteren bevorzugten Ausführungsformen ist vorgesehen, dass die elektronische Vorrichtung 200 wenigstens ein erstes Signal, insbesondere ein digitales Signal, über die wenigstens eine Schutzschaltung und/oder die wenigstens eine Schutzeinrichtung an eine weitere Einheit 300 sendet, vgl. den optionalen Schritt 402 aus Fig. 7. Im Falle des Sendens überträgt die Kondensatorschaltung 114 z.B. der Schutzschaltung 100b (Fig. 2B) vorteilhaft eine Flankensteilheit des zu sendenden Signals bzw. generell Wechselanteile des zu sendenden Signals an die Senke, die das Signal empfangen soll, beispielsweise die vorstehend beschriebene weitere Einheit 300. Des Weiteren lädt bzw. entlädt die Kondensatorschaltung 114 (Fig. 2B) das der Signalsenke 300 zugeordnete Netz bzw. die entsprechende Signalleitung (vgl. z.B. die Signalleitung von dem zweiten Anschluss 110b der Schutzschaltung 100b zu der Treiberschaltung T1 aus Fig. 5) transient, sperrt jedoch Gleichspannungsanteile. Ferner ergibt sich durch die Diode 112 (Fig. 2B) der Schutzschaltung 100b eine wirksame, hochohmige Sperre für von der Signalsenke bzw. der weiteren Einheit 300 (Fig. 1) ausgehende Gleichspannung, wie sie beispielsweise in einem Fehlerfall auftreten kann, bei dem die Signalleitung zwischen der elektronischen Vorrichtung bzw. ihrer Schutzschaltung 100b und der weiteren Einheit 300 zu einer größeren Spannung, beispielsweise einer Versorgungsspannung, kurzgeschlossen wird. Darüber hinaus überträgt die Diode 112 der Schutzschaltung 100b (Fig. 2B) Gleichspannungsanteile des zu sendenden Signals von der Quelle, also der elektronischen Vorrichtung bzw. dem Steuergerät zu der Signalsenke.

Bei weiteren bevorzugten Ausführungsformen ist vorgesehen, dass die elektronische Vorrichtung wenigstens ein zweites Signal, insbesondere ein digitales Signal, über die wenigstens eine Schutzschaltung 100c (Fig. 5) und/oder die wenigstens eine Schutzeinrichtung von einer bzw. der weiteren Einheit empfängt, vgl. den optionalen Schritt 404 aus Fig. 7. In diesem Fall stellt also die weitere Einheit 300, 300a die Signalquelle und die elektronische Vorrichtung 200, 200a, 200a', 200a" die Signalsenke dar.

Hierbei überträgt die Kondensatorschaltung 114 der Schutzschaltung 100c (Fig. 2C) vorteilhaft eine Flankensteilheit (bzw. generell Wechselanteile) des von der Signalquelle (vorliegend die weitere Einheit 300) zu sendenden Quellsignals an die Senke, also die zu schützende elektronische Vorrichtung 200. Des Weiteren lädt bzw. entlädt die Kondensatorschaltung 114 der Schutzschaltung 100c das der Signalsenke zugeordnete Netz bzw. die entsprechende Signalleitung bzw. den Anschluss 210a (Fig. 5) transient, sperrt jedoch Gleichspannungsanteile. Ferner ergibt sich durch die Diode 112 der Schutzschaltung 100c eine wirksame, hochohmige Sperre für von der Signalquelle bzw. der weiteren Einheit 300 ausgehende Gleichspannung, wie sie beispielsweise in einem Fehlerfall auftreten kann, bei dem die Signalleitung (vgl. z.B. die Signalleitung von dem zweiten Anschluss 110b der Schutzschaltung 100c zu der Treiberschaltung T2 aus Fig. 5) zwischen der elektronischen Vorrichtung bzw. ihrer Schutzschaltung und der weiteren Einheit zu einer größeren Spannung, beispielsweise einer Versorgungsspannung, kurzgeschlossen wird. Darüber hinaus überträgt die Diode 112 der Schutzschaltung 100c (Fig. 2C) Gleichspannungsanteile von der Senke, also der elektronischen Vorrichtung bzw. dem Steuergerät zu der Signalquelle, also beispielsweise der weiteren Einheit ("niederohmiges Laden").

Bei weiteren bevorzugten Ausführungsformen können die Schritte 402, 404 des beispielhaft unter Bezugnahme auf Fig. 7 beschriebenen Verfahrens auch in anderer Reihenfolge und/oder zumindest teilweise parallel zueinander (insbesondere im Falle mehrere Anschlüsse) und/oder wiederholt, insbesondere periodisch, ausgeführt werden.

Bei weiteren bevorzugten Ausführungsformen ist vorgesehen, dass die wenigstens eine Schutzschaltung 100, 100a, 100b, 100c und/oder die wenigstens eine Schutzeinrichtung 1000, 1000a, 1000b den wenigstens einen Anschluss 210 vor Überspannungen schützt. Dies kann bei weiteren bevorzugten Ausführungsformen z.B. auf die vorstehend beispielhaft unter Bezugnahme auf Fig. 1 bis Fig. 6 beschriebenen Weise erfolgen.

Das Prinzip gemäß den Ausführungsformen kann für alle elektronischen Vorrichtungen genutzt werden, insbesondere für digitale Signalübertragungen, und ist besonders vorteilhaft auch auf Steuergeräte für eine Beleuchtungseinrichtung, insbesondere für Kraftfahrzeuge, anwendbar. Weitere Vorteile sind der passive Charakter der Schutzschaltung, die keine (abgesehen von ggf. in den Widerständen 116a, 116b dissipierter) Energie (bzw. eine eigene Stromversorgung) benötigt, der geringe Bauraum (gute Integrierbarkeit), und die einfache Skalierbarkeit.

Obwohl vorstehend unter Bezugnahme auf Fig. 4 bis 7 überwiegend die Varianten 100b, 100c der Schutzschaltung nach Fig. 2B, 2C beispielhaft beschrieben worden sind, ergeben sich bei weiteren bevorzugten Ausführungsformen viele der vorstehend beschriebenen Vorteile (z.B.: passiv, kleiner Bauraum, wirksamer Schutz vor Überspannungen) auch bei der nicht erfindungsgemäßen Schutzschaltung 100a gemäß Fig. 2A. Des Weiteren kann die Schutzschaltung 100a nach Fig. 2A beispielsweise durch in das Steuergerät 200 integrierte pull-up-Widerstände (nicht gezeigt, z.B. in einzelne mit dem Anschluss 210 korrespondierende Ports integriert) z.B. zu der Konfiguration 100c nach Fig. 2C ergänzt werden.

## Patentansprüche

1. Schutzschaltung (100; 100a; 100b; 100c) für einen zur Datenkommunikation mit einer weiteren Einheit (300; 300a) verwendbaren Anschluss (210; 210a, 210b; 210c, 210d, 210e, 210f) einer elektronischen Vorrichtung (200; 200a; 200a', 200a''), insbesondere eines Steuergeräts (200), wobei die Schutzschaltung (100; 100a; 100b; 100c) eine Parallelschaltung (110) aus einer Diode (112) und einer wenigstens einen Kondensator (C1) aufweisenden Kondensatorschaltung (114) aufweist, wobei ein erster Anschluss (110a) der Parallelschaltung (110) mit dem Anschluss (210; 210a, 210b; 210c, 210d, 210e, 210f) der elektronischen Vorrichtung (200; 200a; 200a', 200a'') verbindbar ist, und wobei ein zweiter Anschluss (110b) der Parallelschaltung (110) mit der weiteren Einheit (300; 300a) verbindbar ist, und wobei eine Anode (112a) der Diode (112) mit dem ersten Anschluss (110a) der Parallelschaltung (110) verbunden ist, wobei ein erster Widerstand (116a) zwischen einem zweiten Anschluss (110b) der Parallelschaltung (110) und einem ersten elektrischen Bezugspotential (BP1) geschaltet ist.

2. Schutzschaltung (100; 100a; 100b; 100c) nach Anspruch 1, wobei die Diode (112) eine Schottky-Diode ist.

3. Schutzschaltung (100; 100a; 100b; 100c) nach wenigstens einem der vorstehenden Ansprüche, wobei ein zweiter Widerstand (116b) zwischen dem ersten Anschluss (110a) der Parallelschaltung (110) und einem zweiten elektrischen Bezugspotential (BP2) geschaltet ist.

4. Schutzeinrichtung (1000; 1000a; 1000b) für eine mehrere Anschlüsse (210a, 210b; 210c, 210d, 210e, 210f) zur Datenkommunikation mit einer weiteren Einheit (300; 300a) aufweisende elektronische Vorrichtung (200; 200a; 200a', 200a"), wobei die Schutzeinrichtung (1000; 1000a; 1000b) wenigstens eine Schutzschaltung (100; 100a; 100b; 100c) nach wenigstens einem der vorstehenden Ansprüche aufweist, die wenigstens einem der mehreren Anschlüsse (210a, 210b; 210c, 210d, 210e, 210f) zugeordnet ist.

5. Elektronische Vorrichtung (200; 200a; 200a'; 200a''), insbesondere Steuergerät, mit wenigstens einem Anschluss (210; 210a, 210b; 210c, 210d, 210e, 210f) zur Datenkommunikation mit einer weiteren Einheit (300; 300a), wobei die Vorrichtung (200; 200a; 200a', 200a'') wenigstens eine Schutzschaltung (100; 100a; 100b; 100c) nach wenigstens einem der Ansprüche 1 bis 3 aufweist und/oder wenigstens eine Schutzeinrichtung (1000; 1000a; 1000b) nach Anspruch 4.

6. Elektronische Vorrichtung (200; 200a; 200a'; 200a'') nach Anspruch 5, wobei die wenigstens eine Schutzschaltung (100; 100a; 100b; 100c) und/oder die wenigstens eine Schutzeinrichtung (1000; 1000a; 1000b) in die elektronische Vorrichtung (200; 200a; 200a'; 200a'') integriert ist.

7. Verfahren zum Betreiben einer elektronischen Vorrichtung (200; 200a; 200a', 200a"), insbesondere eines Steuergeräts, mit wenigstens einem Anschluss (210; 210a, 210b; 210c, 210d, 210e, 210f) zur Datenkommunikation mit einer weiteren Einheit (300; 300a), wobei das Verfahren aufweist: Verwenden (400) wenigstens einer Schutzschaltung (100; 100a; 100b; 100c) nach wenigstens einem der Ansprüche 1 bis 3 und/oder wenigstens einer Schutzeinrichtung (1000; 1000a; 1000b) nach Anspruch 4.

8. Verfahren nach Anspruch 7, wobei die elektronische Vorrichtung (200; 200a; 200a'; 200a'') a) wenigstens ein erstes Signal, insbesondere ein digitales Signal, über die wenigstens eine Schutzschaltung (100; 100a; 100b; 100c) und/oder die wenigstens eine Schutzeinrichtung (1000; 1000a; 1000b) an eine weitere Einheit (300; 300a) sendet (402), und/oder b) wenigstens ein zweites Signal, insbesondere ein digitales Signal, über die wenigstens eine Schutzschaltung (100; 100a; 100b; 100c) und/oder die wenigstens eine Schutzeinrichtung (1000; 1000a; 1000b) von einer bzw. der weiteren Einheit (300; 300a) empfängt (404) .

9. Verfahren nach wenigstens einem der Ansprüche 7 bis 8, wobei die wenigstens eine Schutzschaltung (100; 100a; 100b; 100c) und/oder die wenigstens eine Schutzeinrichtung (1000; 1000a; 1000b) den wenigstens einen Anschluss (210; 210a, 210b; 210c, 210d, 210e, 210f) vor Überspannungen schützt.

## Claims

1. Protective circuit (100; 100a; 100b; 100c) for a connection (210; 210a, 210b; 210c, 210d, 210e, 210f) of an electronic device (200; 200a; 200a', 200a"), in particular of a controller (200), which connection can be used for data communication with a further unit (300; 300a), wherein the protective circuit (100; 100a; 100b; 100c) has a parallel circuit (110) consisting of a diode (112) and a capacitor circuit (114) having at least one capacitor (C1), wherein a first connection (110a) of the parallel circuit (110) is connectable to the connection (210; 210a, 210b; 210c, 210d, 210e, 210f) of the electronic device (200; 200a; 200a', 200a"), and wherein a second connection (110b) of the parallel circuit (110) is connectable to the further unit (300; 300a), and wherein an anode (112a) of the diode (112) is connected to the first connection (110a) of the parallel circuit (110), wherein a first resistor (116a) is connected between a second connection (110b) of the parallel circuit (110) and a first electrical reference potential (BP1).

2. Protective circuit (100; 100a; 100b; 100c) according to claim 1, wherein the diode (112) is a Schottky diode.

3. Protective circuit (100; 100a; 100b; 100c) according to at least one of the preceding claims, wherein a second resistor (116b) is connected between the first connection (110a) of the parallel circuit (110) and a second electrical reference potential (BP2).

4. Protective device (1000; 1000a; 1000b) for an electronic device (200; 200a; 200a', 200a") comprising a plurality of connections (210a, 210b; 210c, 210d, 210e, 210f) for data communication with a further unit (300; 300a), wherein the protective device (1000; 1000a; 1000b) has at least one protective circuit (100; 100a; 100b; 100c) according to at least one of the preceding claims which is associated with at least one of the plurality of connections (210a, 210b; 210c, 210d, 210e, 210f).

5. Electronic device (200; 200a; 200a'; 200a"), in particular a controller, comprising at least one connection (210; 210a, 210b; 210c, 210d, 210e, 210f) for data communication with a further unit (300; 300a), wherein the device (200; 200a; 200a', 200a") has at least one protective circuit (100; 100a; 100b; 100c) according to at least one of claims 1 to 3 and/or at least one protective device (1000; 1000a; 1000b) according to claim 4.

6. Electronic device (200; 200a; 200a'; 200a") according to claim 5, wherein the at least one protective circuit (100; 100a; 100b; 100c) and/or the at least one protective device (1000; 1000a; 1000b) is integrated into the electronic device (200; 200a; 200a'; 200a").

7. Method for operating an electronic device (200; 200a; 200a'; 200a"), in particular a controller, comprising at least one connection (210; 210a, 210b; 210c, 210d, 210e, 210f) for data communication with a further unit (300; 300a), wherein the method comprises: using (400) at least one protective circuit (100; 100a; 100b; 100c) according to at least one of claims 1 to 3 and/or at least one protective device (1000; 1000a; 1000b) according to claim 4.

8. Method according to claim 7, wherein the electronic device (200; 200a; 200a'; 200") a) transmits (402) at least one first signal, in particular a digital signal, via the at least one protective circuit (100; 100a; 100b; 100c) and/or the at least one protective device (1000; 1000a; 1000b) to a further unit (300; 300a), and/or b) receives (404) at least one second signal, in particular a digital signal, via the at least one protective circuit (100; 100a; 100b; 100c) and/or the at least one protective device (1000; 1000a; 1000b) from a or the further unit (300; 300a).

9. Method according to at least one of claims 7 to 8, wherein the at least one protective circuit (100; 100a; 100b; 100c) and/or the at least one protective device (1000; 1000a; 1000b) protects the at least one connection (210; 210a, 210b; 210c, 210d, 210e, 210f) against overvoltages.

## Revendications

1. Circuit de protection (100; 100a; 100b; 100c) pour une borne (210; 210a, 210b; 210c, 210d, 210e, 210f) d'un dispositif électronique (200; 200a; 200a', 200a'), en particulier d'un dispositif de commande (200), qui peut être utilisée pour une communication de données avec une autre unité (300; 300a), dans lequel le circuit de protection (100; 100a; 100b; 100c) comprend un circuit parallèle (110) constitué d'une diode (112) et d'un circuit à condensateur (114) présentant au moins un condensateur (C1), dans lequel une première borne (110a) du circuit parallèle (110) peut être connectée à la borne (210; 210a, 210b; 210c, 210d, 210e, 210f) du dispositif électronique (200; 200a; 200a', 200a'), et dans lequel une deuxième borne (110b) du circuit parallèle (110) peut être connectée à l'autre unité (300; 300a), et dans lequel une anode (112a) de la diode (112) est connectée à la première borne (110a) du circuit parallèle (110), dans lequel une première résistance (116a) est montée entre une deuxième borne (110b) du circuit parallèle (110) et un premier potentiel électrique de référence (BP1).

2. Circuit de protection (100; 100a; 100b; 100c) selon la revendication 1, dans lequel la diode (112) est une diode Schottky.

3. Circuit de protection (100; 100a; 100b; 100c) selon au moins l'une des revendications précédentes, dans lequel une deuxième résistance (116b) est connectée entre la première borne (110a) du circuit parallèle (110) et un deuxième potentiel électrique de référence (BP2).

4. Dispositif de protection (1000; 1000a; 1000b) pour un dispositif électronique (200; 200a; 200a', 200a'') ayant une pluralité de bornes (210a, 210b; 210c, 210d, 210e, 210f) pour la communication de données avec une autre unité (300; 300a'), dans lequel le dispositif de protection (1000; 1000a; 1000b) comprend au moins un circuit de protection (100; 100a; 100b; 100c) selon au moins l'une des revendications précédentes, qui est associé à au moins l'une de la pluralité de bornes (210a, 210b; 210c, 210d, 210e, 210f).

5. Dispositif électronique (200; 200a; 200a'; 200a"), en particulier dispositif de commande, comprenant au moins une borne (210; 210a, 210b; 210c, 210d, 210e, 210f) pour la communication de données avec une autre unité (300; 300a), dans lequel le dispositif (200; 200a; 200a', 200a'') comprend au moins un circuit de protection (100; 100a; 100b; 100c) selon au moins l'une des revendications 1 à 3 et/ou au moins un dispositif de protection (1000; 1000a; 1000b) selon la revendication 4.

6. Dispositif électronique (200; 200a; 200a'; 200a") selon la revendication 5, dans lequel ledit au moins un circuit de protection (100; 100a; 100b; 100c) et/ou ledit au moins un dispositif de protection (1000; 1000a; 1000b) est intégré dans le dispositif électronique (200; 200a; 200a'; 200a").

7. Procédé destiné à faire fonctionner un dispositif électronique (200; 200a; 200a'; 200a'), en particulier un dispositif de commande, comprenant au moins une borne (210; 210a, 210b; 210c, 210d, 210e, 210f) pour la communication de données avec une autre unité (300; 300a), dans lequel le procédé présente: utilisation (400) d'au moins un circuit de protection (100; 100a; 100b; 100c) selon au moins l'une des revendications 1 à 3 et/ou d'au moins un dispositif de protection (1000; 1000a; 1000b) selon la revendication 4.

8. Procédé selon la revendication 7, dans lequel le dispositif électronique (200; 200a; 200a'; 200a'') a) émet (402), à une autre unité (300; 300a), au moins un premier signal, en particulier un signal numérique, via ledit au moins un circuit de protection (100; 100a; 100b; 100c) et/ou ledit au moins un dispositif de protection (1000; 1000a; 1000b), et/ou b) reçoit (404), d'une ou bien de l'autre unité (300; 300a), au moins un deuxième signal, en particulier un signal numérique, via ledit au moins un circuit de protection (100; 100a; 100b; 100c) et/ou ledit au moins un dispositif de protection (1000; 1000a; 1000b).

9. Procédé selon au moins l'une des revendications 7 à 8, dans lequel ledit au moins un circuit de protection (100; 100a; 100b; 100c) et/ou ledit au moins un dispositif de protection (1000; 1000a; 1000b) protège ladite au moins une borne (210; 210a, 210b; 210c, 210d, 210e, 210f) de surtensions.
